(19) Europäisches Patentamt

European Patent Office

Office européen des brevets

(11) **EP 0 726 086 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(51) Int Cl.$^7$: **B01D 19/04**

(21) Anmeldenummer: **96101896.7**

(22) Anmeldetag: **09.02.1996**

(54) **Hydrophobe Kieselsäuren enthaltende Entschäumerzubereitungen auf der Basis von Siloxanen**

Silicone based anti foaming agents containing hydrophobic silica

Composé anti-mousse à base de siloxanes contenant de la silice hydrophobe

(84) Benannte Vertragsstaaten:
**AT BE DE ES FR GB NL**

(30) Priorität: **13.02.1995 DE 19504645**

(43) Veröffentlichungstag der Anmeldung:
**14.08.1996 Patentblatt 1996/33**

(73) Patentinhaber: **Wacker-Chemie GmbH**
**81737 München (DE)**

(72) Erfinder:
• **Rautschek, Holger, Dr. rer. nat.**
  **D-01612 Nünchritz (DE)**
• **Gühne, Rosemarie**
  **D-01445 Radebeul (DE)**
• **Otto, Reiner**
  **D-01612 Nüchritz (DE)**

(56) Entgegenhaltungen:
**EP-A- 0 217 501**      **DE-A- 2 925 722**

**Beschreibung**

Die Erfindung betrifft ein Verfahren zur Herstellung von hydrophobe Kieselsäuren enthaltenden Entschäumerzubereitungen auf der Basis von Siloxanen, wobei die hydrophoben Kieselsäuren ein Gemisch aus kommerziell verfügbarer, hydrophober und in situ hydrophobierter, hydrophiler pyrogener und/oder hydrophiler gefällter Kieselsäure darstellen.

In vielen flüssigen, insbesondere wäßrigen Systemen, die als Bestandteile oberflächenaktive Verbindungen enthalten, treten Probleme mit einer, oftmals das erwünschte Maß übersteigenden Schaumbildung auf, wenn diese Systeme in mehr oder weniger intensiven Kontakt mit gasförmigen Stoffen gebracht werden, z.B. beim Begasen von Abwässern, beim intensiven Rühren von Flüssigkeiten, bei Destillations-, Wasch- oder Färbeprozessen sowie bei Abfüllvorgängen.

Die Bekämpfung dieses Schaumes kann auf mechanischem Wege oder durch den Zusatz von Entschäumern erfolgen. Dabei haben sich Entschäumer auf der Basis von Siloxanen besonders bewährt.

Es ist bekannt, daß die Wirksamkeit von Siloxanentschäumern durch hydrophobe Feststoffe, insbesondere hydrophobe Kieselsäuren, gesteigert werden kann. Beim Einsatz hydrophober Kieselsäuren braucht diese lediglich im Trägeröl dispergiert zu werden (DE 24 43 853, DE 29 25 722). Teilweise wird die hydrophobe Kieselsäure erst im Emulgierverfahren zugegeben (DE 26 26 942). Sehr häufig erfolgt die Verwendung von hydrophoben, gefällten Kieselsäuren (EP 217 501, DE 42 23 644).

Bei Einsatz von kostengünstigeren, hydrophilen Kieselsäuren zur Entschäumerherstellung, können diese während des Herstellungsprozesses "in situ" hydrophobiert werden. Diese "in situ" Hydrophobierung kann z. B. mit Hydrogenpolysiloxanen (DD 56 762),; mit α,ω-hydroxyterminierten Polydimethylsiloxanen (SU 358 336, EP 301 531), mit trimethylsiloxyterminierten Polydimethylsiloxanen (PDMS), (z. B. US 36 34 288, US 40 08 173, DE 30 01 573), mit Silanen, welche hydrolysierbare Gruppen enthalten (JP 57 156 008), mit Hexamethyldisilazan (BE 835 485) oder mit Octadecyltrichlorsilan (EP 121 210) erfolgen. Bei dieser Form der Herstellung von Entschäumern wird die Kieselsäure im Siloxan dispergiert (Ross,S. et al.: J. Colloid Interface Sci. 65 (2) 216 - 224 (1978)). Diese Dispersion wird durch Adsorption des Siloxanes an die Kieselsäure-Oberfläche stabilisiert. Hydrophile Kieselsäuren bilden dabei eine sogenannte α-Dispersion, die als Entschäumer quasi unwirksam ist. Durch Erhitzen geht diese α-Dispersion in die sogenannte β-Dispersion über, wobei dann die Menge des an die Oberfläche der Kieselsäure gebundenen Polydimethylsiloxans von kleiner 1 mg/m$^2$ auf 3 bis 6 mg/m$^2$ ansteigt und die Hydrophobierung erfolgt. Um einen wirksamen Entschäumer zu erhalten, ist es vorteilhaft, die α-Dispersion 2 h bis 24 h auf etwa 150 °C erhitzen.

Kombinationen von hydrophoben und hydrophilen Kieselsäuren sind nur für spezielle, emulgatorhaltige, in Wasser dispergierbare Entschäumerzubereitungen beschrieben (DE 28 29 906, EP 106 209). So beschreibt DE 28 29 906 Zubereitungen, bei denen das Gewichtsverhältnis von hydrophober zu hydrophiler Kieselsäure so abgestimmt ist, daß die Dispersion, welche noch einen wasser-, aber ölunlöslichen Emulgator und gegebenenfalls Wasser enthält, eine maximale Stabilität aufweist. Zur Herstellung wird das Trägeröl mit dem Emulgator, gegebenenfalls unter Erwärmen, vermischt und dann zuerst die hydrophobe und abschließend die hydrophile Kieselsäure eingemischt. Als Vorteil wird vor allem die hervorragende Dispersionsstabilität hervorgehoben. EP 106 209 beansprucht in Wasser leicht dispergierbare Entschäumerformulierungen, die eine Vielzahl hydrophober und/oder hydrophiler Füllstoffe enthalten können. Im Beispiel wird eine Mischung aus hydrophiler gefällter und hydrophober pyrogener Kieselsäure eingesetzt. In beiden Patenten erfolgt weder eine spezielle Behandlung oder Hydrophobierung der eingesetzten hydrophilen Kieselsäure noch ist eine derartige Verfahrensstufe vorgesehen.

Signifikante anwendungstechnische Unterschiede zwischen Entschäumern mit in situ hydrophobierten Kieselsäuren und kommerziell verfügbaren, hydrophobierten Kieselsäuren werden in der Literatur nicht beschrieben. Die Antwort auf die Frage, ob eine hydrophobe, oder eine in situ zu hydrophobierende, hydrophile Kieselsäure eingesetzt werden soll, richtet sich vielmehr nach den vorhandenen technologischen Möglichkeiten, da hydrophile Kieselsäuren zwar billiger sind, aber einen höheren Aufwand bei der Herstellung des Entschäumers erfordern (Degussa Schriftenreihe Nr. 42 "Synthetische Kieselsäuren für Entschäumer").

Wirksame Entschäumer auf Siloxanbasis werden weiterhin nach dem Stand der Technik, insbesonders durch die Verwendung von hochviskosen (EP 270 898), verzweigten (EP 549 232), anvernetzten (EP 434 060) oder organomodifizierten (EP 436 791) Polyorganosiloxanen erhalten. Z. B. werden gute Wirksamkeiten in anionischen und nichtionischen Tensiden bzw. eine Persistenz der Entschäumerwirkung bei höheren Tensidkonzentrationen erst durch eine radikalische Modifizierung der Siloxankomponente erreicht (EP 273 448). Diese Maßnahmen zur Verbesserung der Entschäumerwirksamkeit sind relativ aufwendig und erhöhen damit die Herstellungskosten der Entschäumerzubereitungen. Außerdem genügen die erhaltenen Produkte nicht den Anforderungen für den Einsatz im lebensmittelnahen Bereich bzw. im Pharmasektor, da dort vorwiegend lineare Polydimethylsiloxane (Dimethicone) zugelassen sind.

Es war daher die Aufgabe der vorliegenden Erfindung, ein Verfahren zur Herstellung hydrophobe Kieselsäuren enthaltenden Entschäumerzubereitungen auf der Basis von Siloxanen bereitzustellen, welche eine verbesserte Wirksamkeit in unterschiedlichen Tensidlösungen und unter längerer Beanspruchung bei hohen Tensidkonzentrationen aufweisen, ohne daß eine Modifizierung der linearen Polydimethylsiloxane (Dimethicone) notwendig ist. Eine weitere Aufgabe der Erfindung ist die Schaffung verbesserter Entschäumerzubereitungen auf der Basis modifizierter Polyorganosiloxane.

Gegenstand der Erfindung ist ein Verfahren zur Herstellung von hydrophobe Kieselsäuren enthaltenden Entschäumerzubereitungen, dadurch gekennzeichnet, daß (a) 0,5 bis 20 Gew.-% mindestens einer hydrophilen pyrogenen und/oder hydrophilen gefällten Kieselsäure in 5 bis 99 Gew.-% mindestens einer Organosiliciumverbindung der allgemeinen Formel (I)

$$R_a(RO)_bSiO_{(4-a-b)/2} \qquad (I),$$

worin R unabhängig voneinander, gleiche und/oder verschiedene, gesättigte und/oder ungesättigte, substituierte und/oder unsubstituierte, einwertige Kohlenwasserstoffreste mit 1 bis 30 Kohlenstoffatomen, Wasserstoff mit der Maßgabe, daß nur ein Wasserstoff je Silicium gebunden ist, oder Reste der allgemeinen Formel

$$-A-(OC_nH_{2n})_mOR^1 \qquad (II)$$

darstellen, wobei $R^1$ entweder R oder -(O)C-R-Gruppen sowie A einen difunktionellen Kohlenwasserstoffrest mit 2 bis 10 Kohlenstoffatomen bedeuten, die Summe (a+b) ganze oder gebrochene Zahlen größer 1 sowie n Werte von 2 bis 4 und m Werte von 1 bis 100 annehmen, dispergiert werden, (b) die Dispersion mindestens bis zu einer sichtbaren rheologischen Änderung auf Temperaturen von 50 bis 200°C erhitzt, anschließend (c) 0,5 bis 20 Gew.-% hydrophobe pyrogene und/oder hydrophobe gefällte Kieselsäure eingemischt werden und abschließend (d) auf 100 Gew.-% mit einer Organosiliciumverbindung der allgemeinen Formel (I) ergänzt wird.

Üblicherweise sind 0,5 bis 95 Gew.-%, bevorzugt 5 bis 50 Gew.-%, der Kieselsäure in situ hydrophobiert, wobei als zu hydrophobierende Kieselsäure hydrophile pyrogene und/oder hydrophile gefällte Kieselsäuren eingesetzt werden.

Die in situ hydrophobierte Kieselsäure kann erhalten werden durch Erhitzen von einem Teil kommerziell verfügbarer, hydrophiler pyrogener und/oder hydrophiler gefällter Kieselsäure in 5 bis 100 Teilen einer Organosiliciumverbindung der allgemeinen Formel (I), wobei vorzugsweise pyrogene, hydrophile Kieselsäuren mit einer BET-Oberfläche größer 50 $m^2/g$, besonders bevorzugt mit einer BET-Oberfläche größer 150 $m^2/g$, verwendet werden. Der Begriff in situ hydrophobierte Kieselsäure bedeutet auch, daß die dann vorliegende hydrophobe Kieselsäure in der Organosiliciumverbindung der allgemeinen Formel (I) verbleibt und nicht abgetrennt oder anders separat aufgearbeitet wird.

Als kommerziell verfügbare, hydrophobe Kieselsäuren können pyrogene und/oder gefällte Kieselsäuren, vorzugsweise mit einer Methanolzahl größer 50, eingesetzt werden. Mit der Methanolzahl wird der Grad der Hydrophobie angegeben; d. h. wieviel Vol-% Methanol eine wäßrige Lösung enthalten muß, damit die hydrophobe Kieselsäure vollständig von dieser Lösung benetzt wird. Die Bestimmung der Methanolzahl erfolgt duch "Titration" einer Kieselsäure/Wasser-Mischung mit Methanol in Anlehnung an DE 21 07 082.

Bevorzugt werden gefällte Kieselsäuren, die mit Polydimethylsiloxanen oder cyclischen Siloxanen hydrophobiert wurden, eingesetzt, insbesondere jene mit einer BET-Oberfläche von 50 bis 150 $m^2/g$ und einer Agglomeratgröße von 2 bis 15 $\mu$m.

Der Begriff kommerziell verfügbar schließt alle behandelten hydrophoben Kieselsäuren ein, die nach der Behandlung als pulverförmige Produkte, vom Hydrophobiermedium separiert, vorliegen. Die eingesetzten Kieselsäuren werden üblicherweise durch Behandlung mit geeigneten Silylierungsmitteln, wie Silanen und Siloxanen, z. B. in der Gasphase bei erhöhter Temperatur mit dafür geeigneten Mischorganen, hergestellt. Die Herstellung ist bekannt (z. B. EP 378 785). Die Hydrophobierung erfolgt demzufolge vollkommen getrennt von der Herstellung des Entschäumers und dem dort verwendeten Siloxan.

Es können zur in situ Hydrophobierung die gleichen oder verschiedene Organosiliciumverbindungen wie zur Herstellung des Entschäumers verwendet werden. In jedem Fall wird die in situ hergestellte hydrophobe Kieselsäure nicht isoliert, so daß die letztendlich erhaltenen Entschäumerzubereitungen das zur Hydrophobierung verwendete Siloxan enthalten.

Verfahren zur in situ Hydrophobierung von hydrophilen Kieselsäuren bei der Entschäumerherstellung sind dem Fachmann bekannt. Dabei wird die Kieselsäure im Polyorganosiloxan homogen verteilt und durch Erhitzen in Gegenwart eines Silylierungsmittels, wie Polydimethylsiloxan, cyclischen Diorganosiloxanen, Dimethyldichlorsilan, Octyltrichlorsilan oder Hexamethyldisilazan, hydrophobiert. Damit werden die Si-OH-Gruppen an der Oberfläche der Kieselsäure vollständig oder teilweise in Organosiloxygruppen überführt. Dieser Vorgang kann bekanntermaßen durch Katalysatoren beschleunigt werden. Bevorzugt als Hydrophobiermittel verwendet werden Polydimethylsiloxane, wobei trimethylsiloxyterminierte und/oder hydroxyterminierte Organosiliciumverbindungen eingesetzt werden können. So hat es sich in der Praxis bewährt, einem im wesentlichen von Hydroxy- und Alkoxygruppen freien Polyorganosiloxan, in dem die hydrophile Kieselsäure hydrophobiert werden soll, 0,1 bis 10 Gew.-% Organosiloxane, welche 0,1 bis 10 Gew.-% an siliziumgebundenen Alkoxy- und/oder Hydroxygruppen enthalten, zuzusetzen. Besonders bevorzugt ist dabei der Zusatz von $\alpha,\omega$-hydroxyterminierten Polydimethylsiloxanen mit einem $OH_{Si}$-Gehalt von 0,1 bis 2 Gew.-%. Wird die hydrophile Kieselsäure in einem Polydimethylsiloxan dispergiert, steigen Viskosität und Thixotropie stark an, was bis zu pastösen, nicht mehr fließfähigen Produkten führen kann. Beim Erhitzen kommt es zu einer "Verflüssigung" der Mischung, d. h. Viskosität und Thixotropie sinken wieder. Dies ist ein Anzeichen für die in situ Hydrophobierung der Kieselsäure. Das Erhitzen muß demnach mindestens bis zu diesen erkennbaren rheologischen Änderungen durchgeführt werden, bevorzugt jedoch das 2- bis 10-fache der dazu benötigten Zeit. Dabei ist es vorteilhaft, gleichzeitig Scherkräfte anzuwenden. Es ist jedoch auch möglich, die Kieselsäure nach dem Dispergieren unter einfachem Rühren zu erhitzen.

Nach der Herstellung von hydrophober Kieselsäure durch in situ Hydrophobierung wird kommerziell verfügbare hydrophobe pyrogene und/oder hydrophobe gefällte Kieselsäure in die Dispersion der in situ hydrophobierten Kieselsäure eingemischt. Die Temperatur ist dabei niedriger als die während der Hydrophobierung benötigte, sie beträgt bevorzugt weniger als 100°C.

Der Zusatz weiterer Organosiliciumverbindungen der allgemeinen Formel (I) vor, während oder nach dem Einmischen der kommerziell verfügbaren, hydrophoben Kieselsäure ist ebenfalls möglich.

Die Organosiliciumverbindungen der allgemeinen Formel (I) enthalten als Reste R bevorzugt Methylgruppen. R kann jedoch auch neben Wasserstoff jeder andere bekannte Kohlenwasserstoffrest sein. Das schließt u. a. folgende Reste ein: n-Alkylreste mit 2-20 Kohlenstoffatomen, wie z. B. Ethyl-, Hexyl-, Cyclohexyl-; iso-Alkylreste mit 3-20 Kohlenstoffatomen, wie Isopropyl- und Isoamylreste; Alkylreste mit tertären Kohlenstoffatomen, wie tert-Butyl- und tert-Pentyl-; aromatische Kohlenwasserstoffreste, wie Phenyl-, Naphthyl-, Anthrylreste; Alkylarylreste, bei denen das Silicium entweder an einem aromatischen Kohlenstoffatom, wie z. B. bei Tolylresten, oder an einem aliphatischen Kohlenstoffatom, wie z. B. bei Benzylresten, gebunden ist; sowie substituierte Kohlenwasserstoffreste, wie Trifluorpropyl-, cyanoethyl-, Aminopropyl-, Alkoxyaryl-, Alkoxyalkylund Halogenarylreste.

Ein Teil der Reste R, vorzugsweise weniger als 10 Mol-%, können der allgemeinen Formel $-A-(OC_nH_{2n})_mOR^1$ (II) entsprechen, wobei $R^1$ die o. a. Bedeutung hat. Derartige Polyetherreste können z. B. die Verträglichkeit mit Anstrichen oder Klebstoffen sowie die Wirksamkeit der Entschäumer in speziellen Tensidsystemen oder in alkalischen Lösungen verbessern.

Organosiliciumverbindungen der allgemeinen Formel (I) mit Resten der Formel (II) werden beispielsweise durch alkalisch katalysierte Kondensationsreaktionen aus Hydroxy- und/oder Alkoxygruppen enthaltenden Polyorganosiloxanen mit Polyalkylenglykolen hergestellt. Eine andere Möglichkeit, derartige bekannte Verbindungen zu erhalten, ist die platinkatalysierte Umsetzung von siliciumgebundenen Wasserstoff enthaltenden Polyorganosiloxanen mit Allylpolyethern. Beispiele für Reste der Formel (II) sind die Gruppen der allgemeinen Formel

$$-(CH_3)_x-O-(CH_2-CH_2-O)_y-(CH_2-CH(CH_3)-O)_z-R' \tag{III},$$

wobei R' Wasserstoff, Kohlenwasserstoffe mit 1 bis 4 Kohlenstoffatomen oder Acetyl darstellt, x entweder 2 oder 3 ist, y und z Werte zwischen 0 und 20 annimmt.

Die Viskosität der verwendeten Organosiliciumverbindungen der allgemeinen Formel (I) liegt vorzugsweise im Bereich von 10 bis 1 000 000 $mm^2$/s, wobei Viskositäten von 500 bis 50 000 $mm^2$/s besonders bevorzugt sind.

Als Organosiliciumverbindungen der allgemeinen Formel (I) können die erfindungsgemäßen Entschäumerzubereitungen sowohl lineare, wie Polydimethylsiloxane, als auch verzweigte Polyorganosiloxane oder Gemische verschiedener linearer und/oder verzweigter Polyorganosiloxane enthalten.

Lineare Polydimethylsiloxane sind unter dem Namen Methylsiliconöl bzw. Siliconöl bekannt und stellen, je nach Molekulargewicht, niedrig- bis hochviskose Flüssigkeiten dar. Erhalten werden sie bekanntermaßen durch Polymerisation bzw. -kondensation aus den Hydrolyseprodukten des Dimethyldichlorsilans. Sie werden bevorzugt für die Herstellung von Entschäumern im Lebensmittel- und Pharmabereich verwendet.

Verzweigte Polyorganosiloxane werden erhalten, wenn in lineare Polydimethylsiloxane tri- und/oder tetrafunktionelle Einheiten eingebaut werden oder beim Verknüpfen der linearen Siloxane untereinander über Kohlenwasserstoffbrücken. Letzteres ist bekanntermaßen z. B. durch radikalische Quervernetzung oder durch Hydrosilylierungsreaktionen möglich. Eine Möglichkeit, verzweigte Polyorganosiloxane beispielsweise aus den Produkten der Hydrolyse von Dimethyldichlorsilan, Trialkoxysilanen und Siloxanen mit Triorganylsilylgruppen herzustellen, beschreibt DE 43 44 663. Die erfindungsgemäßen Entschäumerzubereitungen können auch verzweigte Polysiloxane nach DE 44 44 175 enthalten, welche durch Hydrosilylierungsreaktionen aus einem Polyorganosiloxan oder Organosiloxan A mit statistisch verteilten, durchschnittlich weniger als 2 funktionellen Gruppen pro Molekül und einem Polyorganosiloxan oder Organosiloxan B mit statistisch verteilten, durchschnittlich mehr als 2 funktionellen Gruppen pro Molekül hergestellt wurden. Dabei sind die funktionellen Gruppen in A und B entweder siliciumgebundene Wasserstoffatome oder ungesättigte Kohlenwasserstoffreste und es liegt jeweils nur eine Art von funktionellen Gruppen in A oder B vor. Im Gegensatz zu den linearen Polyorganosiloxanen weisen verzweigte Siloxane meist ein viskoelastisches Verhalten auf, das beispielsweise am Weissenberg-Effekt (s. Römpp-Chemilexikon, 9. Auflage, S. 5028) erkennbar ist.

Das Verfahren zur Herstellung von hydrophobe Kieselsäuren enthaltende Entschäumerzubereitungen besteht darin, daß

(a) 0,5 bis 20 Gew.-% mindestens einer hydrophilen pyrogenen und/oder hydrophilen gefällten Kieselsäure in 5 bis 99 Gew.-% mindestens einer Organosiliciumverbindung der allgemeinen Formel (I) dispergiert werden,
(b) die Dispersion mindestens bis zu einer sichtbaren rheologischen Änderung auf Temperaturen von 50 bis 200°C erhitzt, anschließend
(c) 0,5 bis 20 Gew.-% kommerziell verfügbare hydrophobe pyrogene und/oder hydrophobe gefällte Kieselsäure eingemischt werden und abschließend
(d) auf 100 Gew.-% mit einer Organosiliciumverbindung der allgemeinen Formel (I) ergänzt wird.

Die erfindungsgemäßen Entschäumerzubereitungen können als weitere Komponenten dem Fachmann bekannte Zusätze, wie QM-Harze, Fettalkohole, Fettsäureamide, Polyurethane, Wachse, Aluminiumoxide, Aluminiumsilikate, Titanoxide, Mineralöle, fette Öle, Fettsäuren, Tenside u.v.a.m. enthalten.

Bei der Herstellung der erfindungsgemäßen Entschäumerzubereitungen können zur Dispergierung der Kieselsäuren alle bekannten Dispergiereinrichtungen wie Kolloidmühlen, Korrundscheibenmühlen, Dissolverscheiben, Rotor-Stator Homogenisatoren, Hochdruckhomogenisatoren oder Ultraschall verwendet werden. Es können auch mehrere Dispergiereinrichtungen gleichzeitig (z. B. ein Rührkessel, der sowohl Dissolverscheiben als auch Rotor-Stator Homogenisatoren enthält) oder auch nacheinander verwendet werden. Bei hochviskosen Produkten können selbstverständlich auch verschiedene Kneteinrichtungen eingesetzt werden.

Die erfindungsgemäßen Entschäumer können zur Bekämpfung von Schäumen in wäßrigen und nichtwäßrigen Systemen verwendet werden. Bei der Anwendung in wäßrigen Systemen, z. B. bei Latices, im Abwasser oder bei Waschprozessen, ist die Anwendung als Emulsion bevorzugt. Die Herstellung derartiger Emulsionen ist dem Fachmann bekannt. Bei der Anwendung in Emulsionen kann der Zusatz der kommerziell verfügbaren, hydrophoben Kieselsäure auch während des Emulgierprozesses erfolgen. Die Herstellung der Entschäumeremulsionen erfolgt nach bekannten Verfahren unter Verwendung von Emulgatoren wie z.B. Sorbitanmonostearat, Polyoxyethylenstearaten, ethoxylierten Sorbitanestern, Glycerinmono- und diestern. Oft ist der Zusatz von Verdickern wie Polyacrylsäuresalzen, Celluloseethern, Polyurethanpolyethercopolymeren, Polyurethanpolyetherpolyharnstoffcopolymeren mit langen Alkylresten, Xanthanen usw. günstig für die Stabilität der Emulsionen. Auch der Zusatz von Konservierungsmitteln kann sinnvoll sein. Die Herstellung von Entschäumeremulsionen kann z.B. in einfachen Rührkesseln, Knetern, ggf. in Kombination mit Homogenisiereinrichtungen wie Hochdruckhomogenisatoren, Kolloidmühlen oder Rotor-Stator-Homogenisatoren erfolgen.

Eine Einbringung der erfindungsgemäßen Entschäumer in pulverförmige Waschmittel ist in bekannter Weise ebenfalls möglich. Es können auch selbstemulgierende Entschäumerformulierungen auf Grundlage der erfindungsgemäßen Entschäumer hergestellt werden.

Es ist aus dem Stand der Technik nicht ableitbar und auch nicht zu erwarten, daß eine deutliche Verbesserung der Entschäumerwirksamkeit durch den Einsatz von Kombinationen verschiedener hydrophober Kieselsäuren erreicht werden kann.

### Ausführungsbeispiele

Alle Viskositätsangeben beziehen sich auf 25 °C.

Methoden für die Prüfung der Wirksamkeit der Entschäumerzubereitungen

### Test A

Test A beschreibt die Wirksamkeit der Entschäumer in Gegenwart von stark schäumenden anionischen Tensiden.

In einem 11-Becherglas (hohe Form) wurden 300 ml einer 0,1%-igen Natriumdodecylsulfatlösung bei 25 $\pm$ 1°C mit einem Käfigrührer bei 1800 min$^{-1}$ 3 min aufgeschäumt. Nach 1 min Ruhe wurde die Schaumhöhe $H_A$ gemessen. Dann wurden 10 mg des zu prüfenden Entschäumers - gelöst in 1 ml Butanon - zugegeben und 1 min eingerührt. Nach 1 min Ruhe wurde die verbleibende Restschaumhöhe $H_E$ gemessen.

Der Grad der Entschäumung, der ein Maß für die Wirksamkeit des Entschäumers darstellt, wurde wie folgt berechnet:

$$E \text{ (in\%)} = (H_A - H_E)/H_A * 100$$

**Test B**

Test B beschreibt die Wirksamkeit der Entschäumer in Gegenwart von hohen Konzentrationen an nichtionischen Tensiden.

In einem 11-Becherglas (hohe Form) wurden 300 ml einer 4%-igen wäßrigen Lösung von Dekaoxyethylentridecylalkohol (erhältlich unter dem Namen Marlipal 013/100 bei der Hüls AG) bei $25 \pm 1°C$ mit einem Käfigrührer bei 1800 $\text{min}^{-1}$ 3 min aufgeschäumt. Nach 1 min Ruhe wurde die Schaumhöhe $H_o$ gemessen. Dann wurden 10 mg des zu prüfenden Entschäumers - gelöst in 1 ml Butanon - zugegeben und 1 min eingerührt und wiederum die Schaumhöhe $H_1$ gemessen. Im Abstand von 1 min wurde die verbleibende Restschaumhöhe über einen Zeitraum von insgesamt 10 min verfolgt ($H_2$ bis $H_{10}$).

Der Schaumhöhen-Zeit-Verlauf wurde graphisch dargestellt und die Fläche (Integral der Schaumhöhe über die Zeit) berechnet ($I_E$). Der Versuch wurde ohne Entschäumer wiederholt, woraus sich das Schaumhöhen-Zeit-Integral $I_A$ ergibt.

Der Grad der Entschäumung, der ein Maß für die Wirksamkeit des Entschäumers darstellt, wurde wie folgt berechnet:

$$E \text{ (in\%)} = (I_A - I_E)/I_A * 100$$

**Test C**

Ausgewählte Entschäumer wurden auch als Emulsion geprüft, wobei die Prüfmethode insbesondere die Beständigkeit des Entschäumers gegen hohe Tensidkonzentrationen bei intensiver Turbulenz erfaßt.

Je 10 Teile Entschäumer werden mit je 4 Teilen Sorbitanmonostearat und 3 Teilen Polyoxyethylen(40)stearat und 83 Teilen Wasser in wäßrige Emulsionen überführt. Zur Prüfung der Entschäumungswirkung werden 250 ml einer 4%-igen Lösung von Na-Paraffinsulfonat mehrmals 90 s mit einem Küchenmixer aufgeschäumt und der Schaumzerfall als Funktion der Zeit beobachtet. Als Maß für die Beständigkeit dient die Anzahl an Wiederholungen, nach denen der Schaum innerhalb von 10 min vollständig zerfallen ist (Break, klare Flüssigkeit sichtbar).

Beispiel 1

92 Teile eines trimethylsiloxyterminierten Polydimethylsiloxanes einer Viskosität von 350 $\text{mm}^2$/s, 1 Teil eines $\alpha$-$\omega$-Hydroxypolydimethylsiloxans einer Viskosität von 75 $\text{mm}^2$/s und 3 Teile einer pyrogenen hydrophilen Kieselsäure mit einer BET-Oberfläche von 200 $\text{m}^2$/g wurden durch Rühren vermischt und in einer Kolloidmühle vermahlen. Es entstand eine stark thixotrope Dispersion. Diese Dispersion wurde unter Rühren auf 130°C erhitzt. Nach 30 min war ein deutlicher Rückgang der Thixotropie zu erkennen ("Verflüssigung"). Das Erhitzen wurde noch 3 h fortgesetzt. Anschließend wurde auf 40°C abgekühlt, 4 Teile einer in der Gasphase mit Hexamethyldisilazan hydrophobierten Kieselsäure mit einer BET-Oberfläche von 200 $\text{m}^2$/g und einer Methanolzahl von 65 eingerührt und die Mischung in einer Kolloidmühle gemahlen.

Beispiel 2

Durchführung analog Beispiel 1, aber statt der pyrogenen hydrophoben Kieselsäure wurde eine gefällte hydrophobe Kieselsäure mit einer BET-Oberfläche von 90 $\text{m}^2$/g, einer Methanolzahl von 66 und einer Agglomeratgröße von 5 $\mu$m verwendet.

Vergleichsbeispiel V1/1

92 Teile eines trimethylsiloxyterminierten Polydimethylsiloxanes einer Viskosität von 350 $\text{mm}^2$/s, 1 Teil eines $\alpha$-$\omega$-Hydroxypolydimethylsiloxans einer Viskosität von 75 $\text{mm}^2$/s und 7 Teile einer pyrogenen hydrophilen Kieselsäure mit einer BET-Oberfläche von 200 $\text{m}^2$/g wurden durch Rühren vermischt und in einer Kolloidmühle vermahlen. Es entstand eine stark thixotrope Dispersion. Diese Dispersion wurde unter Rühren auf 130°C erhitzt. Nach 30 min ist ein deutlicher Rückgang der Thixotropie zu erkennen ("Verflüssigung"). Das Erhitzen wurde noch 3 h fortgesetzt.

Vergleichsbeispiel V1/2

92 Teile eines trimethylsiloxyterminierten Polydimethylsiloxans einer Viskosität von 350 mm$^2$/s, 1 Teil eines α-ω-Hydroxypolydimethylsiloxans einer Viskosität von 75 mm$^2$/s und 7 Teile einer pyrogenen hydrophoben Kieselsäure mit einer BET-Oberfläche von 200 m$^2$/g wurden durch Rühren vermischt und in einer Kolloidmühle vermahlen.

Verleichsbeispiel V1/3

92 Teile eines trimethylsiloxyterminierten Polydimethylsiloxanes einer Viskosität von 350 mm$^2$/s, 1 Teil eines α-ω-Hydroxypolydimethylsiloxans einer Viskosität von 75 mm$^2$/s und 7 Teile einer gefällten hydrophoben Kieselsäure mit einer BET-Oberfläche von 90 m$^2$/g wurden durch Rühren vermischt und in einer Kolloidmühle vermahlen.

Die Ergebnisse der Beispiele 1, 2 sowie der Vergleichsbeispiel V1/1 bis V1/3 sind in der Tabelle 1 dargestellt.

Tabelle 1

| Bsp. | 1 | 2 | V1/1 | V1/2 | V1/3 |
|---|---|---|---|---|---|
| Test A | 93 | 92 | 40 | 82 | 86 |
| Test B | 85 | 85 | 75 | 56 | 52 |

Beispiel 3

92 Teile eines trimethylsiloxyterminierten Polydimethylsiloxanes einer Viskosität von 1000 mm$^2$/s, 1 Teil eines α-ω-Hydroxypolydimethylsiloxans einer Viskosität von 75 mm$^2$/s und 3 Teile einer pyrogenen hydrophilen Kieselsäure mit einer BET-Oberfläche von 200 m$^2$/g wurden durch Rühren vermischt und in einer Kolloidmühle vermahlen. Es entstand eine stark thixotrope Dispersion. Diese Dispersion wurde unter Rühren auf 130°C erhitzt. Nach 30 min war ein deutlicher Rückgang der Thixotropie zu erkennen ("Verflüssigung"). Das Erhitzen wurde noch 3 h fortgesetzt. Anschließend wurde auf 40°C abgekühlt, 4 Teile einer gefällten hydrophoben Kieselsäure mit einer BET-Oberfläche von 90 m$^2$/g und einer Agglomeratgröße von 5 μm eingerührt und die Mischung in einer Kolloidmühle gemahlen.

Vergleichsbeispiel V3/1

92 Teile eines trimethylsiloxyterminierten Polydimethylsiloxans einer Viskosität von 1000 mm$^2$/s, 1 Teil eines α-ω-Hydroxypolydimethylsiloxans einer Viskosität von 75 mm$^2$/s und 7 Teile einer pyrogenen hydrophilen Kieselsäure mit einer BET-Oberfläche von 150 m$^2$/g wurden durch Rühren vermischt und in einer Kolloidmühle vermahlen. Es entstand eine stark thixotrope Dispersion. Diese Dispersion wurde unter Rühren auf 130°C erhitzt. Nach 30 min war ein deutlicher Rückgang der Thixotropie zu erkennen ("Verflüssigung"). Das Erhitzen wurde noch 3 h fortgesetzt.

Vergleichsbeispiel V3/2

93 Teile eines trimethylsiloxyterminierten Polydimethylsiloxanes einer Viskosität von 1000 mm$^2$/s und 7 Teile einer gefällten hydrophoben Kieselsäure mit einer BET-Oberfläche von 90 m$^2$/g und einer Agglomeratgröße von 5 μm wurden verrührt und die Mischung in einer Kolloidmühle gemahlen.

Die Beständigkeit der hergestellten Entschäumer (Beispiel 3, Vergleichsbeispiele V3/1 und V3/2) gegen starke mechanische Beanspruchung bei hohen Tensidkonzentrationen wurde nach Test C geprüft. Die Ergebnisse sind in Tabelle 2 dargestellt.

Tabelle 2

| Bsp. | 3 | V3/1 | V3/2 |
|---|---|---|---|
| Test C / Anzahl der Wiederholungen | 6 | 1 | 1 |

Beispiel 3 veranschaulicht die bessere Beständigkeit der erfindungsgemäßen Entschäumerzubereitung gegen hohe Tensidkonzentrationen und starke mechanische Beanspruchung im Vergleich zu Entschäumern, die herkömmlich hergestellt wurden (Vergleichsbeispiele V3/1 und V3/2).

Beispiele 4 bis 6

92 Teile eines trimethylsiloxyterminierten Polydimethylsiloxans einer Viskosität von 350 mm$^2$/s, 1 Teil eines α-ω-Hydroxypolydimethylsiloxans einer Viskosität von 75 mm$^2$/s und 4 Teile einer pyrogenen hydrophilen Kieselsäure mit einer BET-Oberfläche von 150 m$^2$/g (Beispiel 4), 200 m$^2$/g (Beispiel 5) oder 380 m$^2$/g (Beispiel 6) wurden durch Rühren vermischt und in einer Kolloidmühle vermahlen. Es entstand eine stark thixotrope Dispersion. Diese Dispersion wurde unter Rühren auf 130°C erhitzt. Nach 30 min war ein deutlicher Rückgang der Thixotropie zu erkennen ("Verflüssigung"). Das Erhitzen wurde noch 3 h fortgesetzt.

Nach dem Abkühlen wurden je 100 Teile dieser Dispersionen mit 9 Teilen der hydrophoben Kieselsäure von Beispiel 2 und 91 Teilen eines trimethylsiloxyterminierten Polydimethylsiloxans einer Viskosität von 350 mm$^2$/s vermischt und in einer Kolloidmühle gemahlen.

Die Ergebnisse der Beispiele 4 bis 6 enthält Tabelle 3.

Tabelle 3

| Bsp. | 4 | 5 | 6 |
|--------|----|----|----|
| Test A | 89 | 88 | 95 |
| Test B | 85 | 80 | 87 |

Beispiel 7

92,5 Teile eines trimethylsiloxyterminierten Polydimethylsiloxans einer Viskosität von 350 mm$^2$/s, 1 Teil eines α-ω-Hydroxypolydimethylsiloxans einer Viskosität von 75 mm$^2$/s und 2 Teile einer pyrogenen hydrophilen Kieselsäure mit einer BET-Oberfläche von 200 m$^2$/g wurden durch Rühren vermischt und in einer Kolloidmühle vermahlen. Es entstand eine stark thixotrope Dispersion. Diese Dispersion wurde unter Rühren auf 130°C erhitzt. Nach 30 min ist ein deutlicher Rückgang der Thixotropie zu erkennen ("Verflüssigung"). Das Erhitzen wurde noch 3 h fortgesetzt. Anschließend wurde die Mischung auf 40°C abgekühlt und 4,5 Teile der hydrophobierten Kieselsäure von Beispiel 2 eingerührt. Die erhaltene Mischung wurde in einer Kolloidmühle gemahlen.

Vergleichsbeispiel V7

Durchführung analog Beispiel 7, aber es wurde nur kurz auf 130°C erhitzt, ohne daß die Thixotropie abgebaut wurde.

Tabelle 4 zeigt die Ergebnisse von Beispiel 8 sowie des Vergleichsbeispieles V7.

Tabelle 4

| Bsp. | 7 | V7 |
|--------|-------|--------|
| Test A | 92 | 91 |
| Test B | 77 | 54 |
| Breakzeit / (Test B)[*] | 2'30" | > 10' |
| Test C / Anzahl der Wiederholungen | 3 | 0 |

[*] Die Breakzeit beim Test B ist die Zeit, nach der der Schaum vollständig zusammengebrochen war (klare Flüssigkeit wird sichtbar).

**Patentansprüche**

**1.** Verfahren zur Herstellung von hydrophobe Kieselsäuren enthaltende Entschäumerzubereitungen, **dadurch gekennzeichnet, daß** (a) 0,5 bis 20 Gew.-% mindestens einer hydrophilen pyrogenen und/oder hydrophilen gefällten Kieselsäure in 5 bis 99 Gew.-% mindestens einer Organosiliciumverbindung der allgemeinen Formel (I)

$$R_a(RO)_bSiO_{(4-a-b)/2} \hspace{3cm} (I),$$

worin R unabhängig voneinander, gleiche und/oder verschiedene, gesättigte und/oder ungesättigte, substituierte und/oder unsubstituierte, einwertige Kohlenwasserstoffreste mit 1 bis 30 Kohlenstoffatomen, Wasserstoff mit der Maßgabe, daß nur ein Wasserstoff je Silicium gebunden ist, oder Reste der allgemeinen Formel

$$-A-(OC_nH_{2n})_mOR^1 \qquad (II)$$

darstellen, wobei $R^1$ entweder R oder -(O)C-R-Gruppen sowie A einen difunktionellen Kohlenwasserstoffrest mit 2 bis 10 Kohlenstoffatomen bedeuten, die Summe (a+b) ganze oder gebrochene Zahlen größer 1 sowie n Werte von 2 bis 4 und m Werte von 1 bis 100 annehmen, dispergiert werden, (b) die Dispersion mindestens bis zu einer sichtbaren rheologischen Änderung auf Temperaturen von 50 bis 200°C erhitzt, anschließend (c) 0,5 bis 20 Gew.-% hydrophobe pyrogene und/oder hydrophobe gefällte Kieselsäure eingemischt werden und abschließend (d) auf 100 Gew.-% mit einer Organosiliciumverbindung der allgemeinen Formel (I) ergänzt wird.

2. Verfahren zur Herstellung von hydrophobe Kieselsäuren enthaltende Entschäumerzubereitungen nach Anspruch 1, **dadurch gekennzeichnet, daß** die in Stufe (a) und (d) eingesetzte Organosiliciumverbindung gleiche oder verschiedene Verbindungen sind.

## Claims

1. Process for preparing defoamer formulations comprising hydrophobic silicas, **characterized in that** (a) from 0.5 to 20% by weight of at least one hydrophilic pyrogenic and/or hydrophilic precipitated silica is dispersed in from 5 to 99% by weight of at least one organosilicon compound of the general formula (I)

$$R_a(RO)_bSiO_{(4-a-b)/2} \qquad (I),$$

in which R independently of one another represent identical and/or different, saturated and/or unsaturated, substituted and/or unsubstituted, monovalent hydrocarbon radicals having from 1 to 30 carbon atoms, hydrogen with the proviso that only one hydrogen is attached per silicon, or radicals of the general formula

$$-A-(OC_nH_{2n})_mOR^1 \qquad (II),$$

where $R^1$ denotes either R or -(O)-C-R groups and A denotes a difunctional hydrocarbon radical having from 2 to 10 carbon atoms, the sum (a+b) adopts integral or fractional numbers greater than 1, and n adopts values from 2 to 4 and m adopts values from 1 to 100, (b) the dispersion is heated at temperatures from 50 to 200°C at least until there is a visible rheological change, subsequently (c) from 0.5 to 20% by weight of hydrophobic pyrogenic and/or hydrophobic precipitated silica are mixed in, and finally (d) the formulation is made up to 100% by weight with an organosilicon compound of the general formula (I).

2. Process for preparing defoamer formulations comprising hydrophobic silicas according to Claim 1, **characterized in that** the organosilicon compound used in stage (a) and (d) are identical or different compounds.

## Revendications

1. Procédé de préparation de compositions antimousses contenant des silices hydrophobes, caractérisé (a) en ce qu'on disperse 0,5 à 20% en poids d'au moins une silice hydrophile, pyrogène et/ou hydrophile précipitée dans 5 à 99% en poids d'au moins un composé organosilicié de formule générale (I)

$$R_a(RO)_bSiO_{(4-a-b)/2} \qquad (I),$$

dans laquelle R représente, indépendamment l'un de l'autre, des radicaux hydrocarbonés identiques et/ou différents, saturés et/ou insaturés, substitués et/ou non substitués, monovalents, comprenant 1 à 30 atomes de carbone, de l'hydrogène à condition que seulement un hydrogène soit lié par silicium, ou des radicaux de formule générale

$$-A-(OC_nH_{2n})_mOR^1 \qquad (II),$$

R$^1$ signifiant R ou des groupements -(O)C-R et A représentant un radical hydrocarboné difonctionnel comprenant 2 à 10 atomes de carbone, la somme (a+b) représentant des nombres entiers ou fractionnaires supérieurs à 1 et n des valeurs de 2 à 4 et m des valeurs de 1 à 100, (b) on chauffe la dispersion au moins jusqu'à une modification rhéologique visible à des températures de 50 à 200°C, (c) on délaye ensuite 0,5 à 20% en poids de silice hydrophobe, pyrogène et/ou hydrophobe précipitée et (d) on complète enfin à 100% en poids avec un composé organosilicié de formule générale (I).

2. Procédé pour la préparation de compositions antimousses contenant des silices hydrophobes selon la revendication 1, **caractérisé en ce que** les composés organosiliciés utilisés dans les étapes (a) et (d) sont des composés identiques ou différents.